(19) Europäisches Patentamt
European Patent Office
Office européen des brevets

(11) EP 1 655 339 A1

(12) EUROPEAN PATENT APPLICATION

(43) Date of publication:
10.05.2006 Bulletin 2006/19

(51) Int Cl.:
C08L 23/06 (2006.01)    C08L 23/04 (2006.01)
C08F 10/02 (2006.01)

(21) Application number: 04026097.8

(22) Date of filing: 03.11.2004

(84) Designated Contracting States:
AT BE BG CH CY CZ DE DK EE ES FI FR GB GR
HU IE IS IT LI LU MC NL PL PT RO SE SI SK TR
Designated Extension States:
AL HR LT LV MK YU

(71) Applicant: Borealis Technology Oy
06101 Porvoo (FI)

(72) Inventors:
• van Praet, Erick
3220 Holsbeek (BE)

• von Marion, Remko
06101 Porvoo (FI)
• Gustafsson, Bill
44441 Stenungsund (SE)
• Fredrikson, Siw
3744 Skien (NO)
• Bäckmann, Mats
41651 Göteborg (SE)

(74) Representative: Kador & Partner
Corneliusstrasse 15
80469 München (DE)

(54) **Multimodal polyethylene composition obtainable with high activity catalyst**

(57) The present invention concerns a multimodal, preferably bimodal, polyethylene (PE) composition comprising a base resin which comprises

(A) a first ethylene homo- or copolymer fraction, and

(B) a second ethylene homo- or copolymer fraction,

wherein

(i) fraction (A) has a lower weight average molecular weight than fraction (B),

(ii) the base resin has an MFR$_5$ of at least 0.01 g/10 min and

(iii) the base resin is obtainable by polymerising ethylene and optionally at least one comonomer in the presence of a catalyst having an overall activity of at least 30 kg polymer per g catalyst.

Furthermore, the present invention relates to a process for the production of such a composition as well as to the use of such a composition for the production of articles.

Printed by Jouve, 75001 PARIS (FR)

**Description**

The present invention concerns a multimodal, preferably bimodal, polyethylene (PE) composition comprising two ethylene homo- or copolymer fractions with different molecular weight. Furthermore, the present invention relates to a process for the production of such a composition as well as to the use of such a composition for the production of articles.

To obtain multimodal PE compositions, comprising at least a low molecular weight (LMW) fraction and a high molecular weight (HMW) fraction, with a sufficient degree of homogeneity has conventionally been problematic. The homogeneity of the final composition is however a critical factor in many end use applications, e.g. in moulded articles, including injection moulded articles (e.g. packaging articles, such as transportation packaging, houseware applications and caps/closures) and blow moulded articles, pipes and films.

Furthermore, in certain applications residues of the polymerisation catalyst in the final composition are not desirable.

Additionally, it is a well known problem that the activity of a polymerisation catalyst which has to be operated under different polymerisation conditions, e.g. in a multistage process, drops in subsequent stages so that a very low overall activity results. Furthermore, Ziegler-Natta catalysts under high $H_2$ concentrations, such as applied for the production of low molecular weight components, often loose activity. Thus, in order to keep the productivity in the different stages of the process on a reasonable level in order to obtain a desired split, the overall productivity is normally low.

To solve the activity problem of the catalyst, comonomer has been used to increase the activity. However additions of small amounts of comonomers may not boost the reaction in to the desired level and/or may have an undesirable influence on the properties of the polymer.

Accordingly, it is an object of the present invention is to provide a multimodal PE composition, in various end applications including moulding and pipe applications, with improved properties.

A further object of the invention is to provide a multimodal PE composition which, depending on the properties that are variable within the product window of the invention, enables further, desirable alternatives for different end applications of the multimodal PE, which are obtainable in high production yields and with desirable, even improved, polymer properties over the prior art products.

Another object is to provide a very feasible process for producing a multimodal PE composition of the invention, which process enables to obtain the multimodal product with high production yields and which may have very advantageous properties desirable for many end applications.

Now it has surprisingly been found that a multimodal PE composition with very desirable properties, including improved homogeneity, is obtainable by polymerising ethylene and optionally at least one comonomer using a catalyst with an activity of at least 30 kg polymer per g catalyst.

The present invention thus provides a multimodal polyethylene composition comprising a base resin which comprises at least

(A) a first fraction of an ethylene homo- or copolymer (also referred herein as LMW fraction), and

(B) a second fraction of ethylene homo- or copolymer, (also referred herein as HMW fraction)

wherein

(i) fraction (A) has a lower weight average molecular weight than fraction (B),

(ii) the base resin has an $MFR_5$ of at least 0.01 g/10 min, and

(iii) the base resin is obtainable by polymerising ethylene and optionally at least one comonomer in the presence of a catalyst having an overall activity of at least 30 kg polymer per g catalyst.

Preferably, the overall activity of the catalyst at least 40 kg polymer per g catalyst, more preferably at least 50 kg polymer per g catalyst.

Furthermore, it may even be preferred that the overall activity of the catalyst is up to 70 kg polymer per g catalyst, more preferably up to 80 kg polymer per g catalyst, more preferably up to 100 kg polymer per g catalyst, still more preferably up to 150 kg polymer per g catalyst, and most preferably up to 200 kg polymer per g catalyst. The activity of the catalyst may e.g. be from 50 to 70 kg polymer per g catalyst.

The overall activity of the catalyst is defined herein as the overall productivity of polymer, i.e. the amount of polymer, in kg, produced by g catalyst over the whole process for the production of the base resin. The activity can vary within the range of the invention depending on the level of the productivity desired.

Thus in one embodiment of the invention the multimodal PE product obtainable by a catalyst with an overall activity of 50 to 70, preferably of 60 to 65, kg polymer per g catalyst is preferred.

In another embodiment the multimodal PE product is obtainable by a catalyst with an overall activity of up to 150, e.g. up to 200, kg polymer per g catalyst.

In a further embodiment the multimodal PE product is obtainable by a catalyst with an overall activity of at least 115, or preferably at least 120, kg polymer per g catalyst and e.g. up to 140, or up to 130, kg polymer per g catalyst.

The polyethylene compositions according to the invention have an improved microscopic mixing directly after their production, which is demonstrated by the fact that already after a single, usual compounding step a resin with an excellent homogeneity is obtained. Thus, the composition combines good mechanical with good surface properties and hence e.g. an improved impact strength with an improved appearance of the final product.

The obtained homogeneity is very advantageous i.a. for pipe and moulding applications.

Without being bound by any theory, it is believed that, due to the high activity of the catalyst in the high molecular weight fraction (B), less polymer particles of "very high molecular weight" (i.e. gels, defined e.g. as the "white spots" in the tests below) are formed, which particles can cause inhomogeneities in the composition. As a result of the invention more homogeneous final polymer product is obtained compared to products produced by a low activity catalysts.

In the multimodal PE composition of the invention obtainable by the polymerisation process using a high activity catalyst there are less agglomerated gel components formed by particles which have been long in reactor system producing very HMW polymer components. Thus excellent homogeneity is achieved.

Furthermore, in the final polymer product of the invention also a uniform distribution of the LMW and HMW fractions within the individual particles, i.e. a high compositional homogeneity, can be obtained due to the advantageous split-balance in the product which is obtainable by the high activity catalyst.

In a preferred embodiment of the invention, the composition shows a homogeneity defined as white spot area of 1 % or below, e.g. 0.01 to 1 %, preferably 0.7 % or below, e.g. 0.01 to 0.7 %.

The homogeneity of the composition in terms of its white spot area is measured after a single compounding step as defined in detail below. Preferably, the composition measured after said single compounding step, has a white spot area of 0.7 % or below, usually then 0.01 to 0.7 %

Further preferred, the multimodal PE composition, measured after said single compounding step, has a rating in the ISO 18553 white spot rating test (which is based on the standard, ISO 18553, and is measured as described below in detail) of below 4.5, e.g. between 0.01 and 4.5, more preferably below 3, e.g. 0.01 to 3.

The present invention thus enables PE compositions with versatile property variations so that, depending on the intended end application of the composition, i.a. different combinations in the multimodality, including variations of the MFRs between the LMW and HMW fractions, and thus variations to the mechanical properties, are possible while still obtaining good homogeneity.

Moreover, decreased amounts of undesirable residues of the catalyst (i.e. increased purity) can be achieved due to the fact that the product is obtainable by a catalyst with high activity, compared to the polyethylene compositions with similar multimodality, but obtainable by a low activity catalyst, e.g. with an activity less than 10 kg polymer per g catalyst, such as silica-supported Ziegler-Natta catalysts.

Therefore the polymer of the invention is cleaner, which "purity" is very advantageous and aimed at or even required for many end applications (i.a. in end applications which are in contact with food or drinking water).

The term "molecular weight" as used herein denotes the weight average molecular weight $M_w$.

The term "base resin" means the entirety of polymeric components in the polyethylene composition according to the invention, usually making up at least 90 wt% of the total composition. Preferably, the base resin is consisting of fractions (A) and (B), optionally further including a prepolymer fraction in an amount of up to 20 wt%, more preferably up to 10 wt% and most preferably up to 5 wt% of the total base resin. It is, however, also possible that the base resin of the composition consists only of fractions (A) and (B).

In addition to the base resin, usual additives for utilization with polyolefins, such as pigments (for example carbon black), stabilizers (antioxidant agents), antacids and/or anti-UVs, antistatic agents and utilization agents (such as processing aid agents) may be present in the polyethylene composition. Preferably, the amount of these additives is 10 wt% or below, further preferred 8 wt% or below, of the total composition.

When used in pipe applications, preferably, the composition comprises carbon black in an amount of 8 wt% or below, further preferred of 1 to 4 wt%, of the total composition.

Further preferred, the amount of additives different from carbon black is 1 wt% or less, more preferably 0.5 wt% or less.

Usually, a polyethylene composition comprising at least two polyethylene fractions, which have been produced under different polymerisation conditions resulting in different (weight average) molecular weights for the fractions, is referred to as "multimodal". The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

Fraction (A), i.e. the low molecular weight (LMW) fraction preferably has a density of more than 940 kg/m$^3$, e.g. 940 to 977 kg/m$^3$.

In a preferred embodiment, fraction (A) is an ethylene homopolymer which then has preferably a density of at least 950 kg/m$^3$, more preferably at least 960 kg/m$^3$, and even more preferably at least 966 kg/m$^3$. Preferably, the density of the homopolymer of 980 kg/m$^3$ or lower, more preferably 977 kg/m$^3$ or lower.

In case fraction (A) is a copolymer, a preferred density range is 945 to 955 kg/m$^3$

Furthermore, preferably fraction (A) has a weight average molecular weight $M_w$ of 5 to 200 kD.

The MFR$_2$ of fraction (A) preferably is at least 3 g/10min, more preferably at least 10 g/10min, still more preferably at least 50 g/10min, and depending on the desired end application may preferably be at least 100 g/10min, and more preferably at least 200 g/10min.

Usually, an upper limit for the MFR$_2$ of fraction (A) is 3000 g/10min.

As an example preferred ranges for the MFR$_2$ of fraction (A) are at least 10 g/10 min, preferably at least 50 g/ 10 min, more preferably at least 100 g/10 min, e.g. 200 g/10 min, and up to 3000 g/10 min, such as 1000 g/10min, preferably up to 800, e.g. up to 600 g/10 min, especially for certain moulding applications including caps and closures and for some pipe applications. And e.g. an MFR$_2$ of at least 3 g/10min, preferably from 10 to 1000 g/10 min, more preferably from 20 to 500 g/10min, still more preferably from 30 to 300 g/10min, especially in some injection moulding applications including transportation packaging and housware articles.

In a preferred embodiment, the base resin of the composition has an $M_w$ of 100 to 1 000 kD, more preferably of 100 to 900 kD.

The density of the base resin preferably is more than 920 kg/m$^3$.

In one embodiment of the molding applications including transportation packaging and houseware, the base resin e.g. may typically have a density of 923 to 980 kg/m$^3$, more preferably at least 950 kg/m$^3$, and most preferably at least 955 kg/m$^3$, e.g. from 957 or 958 to 970 kg/m$^3$.

In another moulding embodiment including caps and closures a density of at least 930 kg/m$^3$, preferably of at least 945 kg/m$^3$ more preferably at least 950 kg/m$^3$, e.g. 940 to 980 kg/m$^3$, such as 945 to 980, preferably 952 to 980 kg/m$^3$, and more preferably 955-975 kg/m$^3$, may be preferred.

Typically for pipe applications, the base resin preferably has a density of at least 930 kg/m$^3$, more preferably from 940 to 970 kg/m$^3$. For example, the density may be at least 949 kg/m$^3$, preferably at least 950 kg/m$^3$ , such as at least 953 kg/m$^3$, e.g. 950 to 968 kg/m$^3$ or 958 to 960 kg/m$^3$.

The MFR$_5$ of the base resin particularly for pipe and some moulding applications preferably is less or equal to 2 or 1 g/10 min, less or equal to 0.6 g/10 min, less or equal to 0.35 g/10 min, less or equal to 0.30 or 0.28 g/10 min,

Moreover, in some end applications the MFR$_5$ of the base resin preferably is less than or equal to 0.25 g/10 min, and the lowest limit is e.g. 0.001 g/10 min.

For another moulding applications including caps and closures the MFR$_5$ of the base resin is preferably up to 60 g/10min, e.g.0.05 to 50 g/10min, more preferably 0.1 to 40 g/10min, and most preferably 0.1 to 30 g/10 min.

In further moulding applications including transportation packaging and houseware the MFR$_5$ of the base resin preferably is less than 100 g/10 min, such as 5-50 g/10 min, e.g. between 15 to 30 g/10min.

In yet another embodiment of the base resin of the invention the MFR$_5$ less or equal to 6 g/10 min may be desired.

Preferably, the MFR$_2$ of the base resin, e.g for moulding applications including caps and closures, may often be less than or equal to 100 g/min, preferably less than equal to 50 g/10 min, such as less than equal to 20 g/10 min, e.g. 0.01 to 20 g/10min, more preferably from 0.3 or from 0.5 to 15 g/10min, and e.g. for moulding applications including packaging and houseware more than 0.3 g/10 min, preferably more than 1 g/10 min, e.g. 1-100 g/10 min, such as 1-50 g/10 min, preferably from 2 to 30 or from 2 to 20 g/10min, even 2 to 14 g/10min may be desired.

In another moulding application, the MFR$_2$ of the base resin preferably is up to 10 g/10min, e.g. 0.5 to 5 g/10 min.

In a further embodiment of the invention, especially for certain pipe and moulding applications, the MFR$_{21}$ of the base resin may preferably be up to 70 g/10min, e.g. from 3 to 50 g/10min, more preferably 4 to 40 g/10min.

In one embodiment of the present invention where the composition of the invention is preferably used for injection moulded transport packaging and houseware articles the shear thinning index SHI$_{(1,100)}$ and the log MFR$_2$ of the composition preferably satisfy the following relation:

$$SHI_{(1,100)} \geq -5.5 \log MFR_2 \ [g/10min]/(g/10min) + 9.66,$$

more preferably satisfy the following relation:

$$SHI_{(1,100)} \geq -5.5 \log MFR_2 \ [g/10min]/(g/10min) + 10.66,$$

and most preferably satisfy the following relation:

$$SHI_{(1,100)} \geq -5.5 \log MFR_2 \ [g/10min]/(g/10min) + 11.66.$$

Further in this embodiment, the shear thinning index $SHI_{(1,100)}$ and the log $MFR_2$ of the composition preferably satisfy the following relation:

$$SHI_{(1,100)} \leq -9 \log MFR_2 \ [g/10min]/(g/10min) + 20.71,$$

and more preferably satisfy the following relation:

$$SHI_{(1,100)} \leq -9 \log MFR_2 \ [g/10min]/(g/10min) + 19.21.$$

Further in this embodiment, the composition preferably has an shear thinning index $SHI_{(1,100)}$ of at least 4, more preferably of at least 6, still more preferably of at least 8, still more preferably of at least 9, and most preferably of at least 10.

Further in this embodiment, the composition preferably has an shear thinning index $SHI_{(1,100)}$ of at most 22, more preferably of at most 15, and most preferably of at most 12.

Further in this embodiment, the shear thinning index $SHI_{(1,100)}$ and the $MFR_2$ of the composition preferably satisfy the following relation:

$$SHI_{(1,100)} \geq -0.3056 \ MFR_2 \ [g/10min]/(g/10min) + 8.61,$$

more preferably satisfy the following relation:

$$SHI_{(1,100)} \geq -0.3056 \ MFR_2 \ [g/10min]/(g/10min) + 9.61,$$

and most preferably satisfy the following relation:

$$SHI_{(1,100)} \geq -0.3056 \ MFR_2 \ [g/10min]/(g/10min) + 10.61.$$

Further in this embodiment the shear thinning index $SHI_{(1,100)}$ and the $MFR_2$ of the composition preferably satisfy the following relation:

$$SHI_{(1,100)} \leq -0.5\ MFR_2\ [g/10min]/(g/10min) + 19,$$

and more preferably satisfy the following relation:

$$SHI_{(1,100)} \leq -0.5\ MFR_2\ [g/10min]/(g/10min) + 17.5.$$

In a further embodiment of the present invention where the composition of the invention is preferably used for injection moulded or compression moulded caps and closures the shear thinning index $SHI_{(1,100)}$ and the log $MFR_2$ of the composition preferably satisfy the following relation:

$$SHI_{(1,100)} \geq -10.58\ \log MFR_2\ [g/10min]/(g/10min) + 12.94,$$

more preferably satisfy the following relation:

$$SHI_{(1,100)} \geq -10.58\ \log MFR_2\ [g/10min]/(g/10min) + 13.94,$$

and most preferably satisfy the following relation:

$$SHI_{(1,100)} \geq -10.58\ \log MFR_2\ [g/10min]/(g/10min) + 14.94.$$

Further in this embodiment, the shear thinning index $SHI_{(1,100)}$ and the log $MFR_2$ of the composition preferably satisfy the following relation:

$$SHI_{(1,100)} \leq -12.44\ \log MFR_2\ [g/10min]/(g/10min) + 30.5,$$

and more preferably satisfy the following relation:

$$SHI_{(1,100)} \leq -12.44\ \log MFR_2\ [g/10min]/(g/10min) + 25.5.$$

The composition in this embodiment preferably has an shear thinning index $SHI_{(1,100)}$ of at least 4, more preferably of at least 5, still more preferably of at least 6, still more preferably of at least 8, and most preferably of at least 9.
Further in this embodiment, the composition preferably has an shear thinning index $SHI_{(1,100)}$ of at most 40, more preferably of at most 30, and most preferably of at most 25.
Further in this embodiment, the shear thinning index $SHI_{(1,100)}$ and the $MFR_2$ of the composition preferably satisfy the following relation:

$$SHI_{(1,100)} \geq -1.44\ MFR_2\ [g/10min]/(g/10min) + 14,$$

more preferably satisfy the following relation:

$$SHI_{(1,100)} \geq -1.44\ MFR_2\ [g/10min]/(g/10min) + 15,$$

and most preferably satisfy the following relation:

$$SHI_{(1,100)} \geq -1.44\ MFR_2\ [g/10min]/(g/10min) + 16.$$

Further in this embodiment, the shear thinning index $SHI_{(1,100)}$ and the $MFR_2$ of the composition preferably satisfy the following relation:

$$SHI_{(1,100)} \leq -1.69\ MFR_2\ [g/10min]/(g/10min) + 32,$$

and more preferably satisfy the following relation:

$$SHI_{(1,100)} \leq -1.69\ MFR_2\ [g/10min]/(g/10min) + 27.$$

In a further embodiment of the invention including some pipe applications, the base resin of the composition of the invention typically has an shear thinning index $SHI_{(2.7/210)}$ of at least 5, preferably at least 20, more preferably at least 40, still more preferably at least 50, still more preferably at least 70 and most preferably at least 80 or at least 100, e.g. 5 to 300.

Further, especially for pipe applications, the dynamic viscosity at a shear stress 2.7 kPa of the base resin is typically more or equal to 10 000 Pas, preferably more or equal to 200 000, more preferably more or equal to 300 000 or 350 000 Pas, e.g. is up to 500 000 Pas.

The weight split between fractions (A) and (B) in the base resin is preferably from 20:80 to 80:20, more preferably from 30:70 to 70:30, still more preferably from 40:60 to 60:40.

In some embodiments of the invention including preferred pipe applications split of 45:55 to 55:45 or even 48: 52 to 53:47 may be highly desirable.

It is to be understood that although the above given values are presented for certain end applications of the base resin/composition these may be usable also for other embodiments of the multimodal polyethylene composition of the invention.

Where one of fractions (A) or (B) is a copolymer of ethylene, ethylene can be copolymerised at least with one comonomer, preferably a C3-C12 alpha-olefin, more preferably a C4-C8 alpha-olefin. The comonomer content in the base resin may be at least 0.001 mol-%, at least 0.05 mol-%. The comonomer content may preferably be up to 10 mol-%, preferably 3.5 mol%, such as 0.01-3 mol-%, e.g. 0.01-2 mol-%.

In one preferable embodiment, the LMW fraction (A) is a homopolymer of ethylene and fraction (B) is a copolymer of ethylene.

In the polyethylene composition according to the invention fraction (B) preferably is a copolymer of ethylene with at least one further alpha-olefin comonomer.

Preferably, the alpha-olefin comonomer of fraction (B) is having from 4 to 10 carbon atoms, and more preferably is selected from 1-butene, 1-hexene, 4-methyl-1-pentene, 1-octene and 1-decene.

Where herein preferred features of fractions (A) and/or (B) of the composition of the present invention are given, these values are generally valid for the cases in which they can be directly measured on the respective fraction, e.g. when the fraction is separately produced or produced in the first stage of a multistage process.

However, the base resin may also be and preferably is produced in a multistage process wherein e.g. fractions (A) and (B) are produced in subsequent stages. In such a case, the properties of the fractions produced in the second and third step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

The polyethylene composition according the invention preferably is produced so that at least one of fractions (A) and (B), preferably (B), is produced in a gas-phase reaction.

Further preferred, one of the fractions (A) and (B) of the polyethylene composition, preferably fraction (A), is produced in a slurry reaction, preferably in a loop reactor, and one of the fractions (A) and (B), preferably fraction (B), is produced in a gas-phase reaction.

Further, the polyethylene base resin preferably is produced in a multistage process, whereby the fractions (A) and (B) may be produced in any order. Polymer compositions produced in such a process are also designated as "in-situ"-blends.

A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst.

Accordingly, it is preferred that fraction (A) and (B) of the polyethylene composition are produced in different stages of a multistage process, in any order.

Preferably, the multistage process comprises at least one gas phase stage in which, preferably, fraction (B) is produced.

Further preferred, fraction (B) is produced in a subsequent stage in the presence of fraction (A) which has been produced in a previous stage.

In one preferable embodiment of the invention the polyethylene composition is obtainable by a further compounding step, wherein the composition powder obtained from the polymerisation process is extruded in an extruder and then converted to polymer pellets.

The present invention furthermore relates to a multistage process for the production of a multimodal polyethylene composition comprising the steps of

i) polymerising ethylene monomers, and optionally one or more alpha-olefin comonomers, in the presence of a polymerisation catalyst to obtain a first ethylene homo- or copolymer fraction (A)

ii) polymerising ethylene monomers, and optionally one or more alpha-olefin comonomers, in the presence of a polymerisation catalyst to obtain a second ethylene homo- or copolymer fraction (B) having a higher average molecular weight than fraction (A)

wherein the second polymerisation step is carried out in the presence of the polymerization product of the first step, and the overall activity of the catalyst at least 30 kg polymer per g catalyst.

Preferably, the overall activity of the catalyst at least 40 kg polymer per g catalyst, more preferably at least 50 kg polymer per g catalyst.

Furthermore, preferably, the activity of the catalyst is up to 70 kg polymer per g catalyst, more preferably up to 80 kg polymer per g catalyst, more preferably up to 100 kg polymer per g catalyst, still more preferably up to 150 kg polymer per g catalyst, and most preferably up to 200 kg polymer per g catalyst. The activity of the catalyst may e.g. be from 50 to 70 kg polymer per g catalyst.

Thus in one embodiment of the invention the PE product obtainable by a catalyst with activity of 50 to 70, preferably of 60 to 65, kg polymer per g catalyst is preferred.

In another embodiment the PE product is obtainable by a catalyst with an activity of up to 150, e.g. up to 200, kg polymer per g catalyst.

In a further embodiment the PE product is obtainable by a catalyst with an activity of at least 115, or preferably at least 120, kg polymer per g catalyst and e.g. up to 140, or up to 130, kg polymer per g catalyst.

It is previously known to produce multimodal, in particular bimodal, olefin polymers, such as multimodal polyethylene, in a multistage process comprising two or more reactors connected in series. As instance of this prior art, mention may be made of EP 517 868, which is hereby incorporated by way of reference in its entirety, including all its preferred embodiments as described therein, as a preferred multistage process for the production of the polyethylene composition according to the invention.

Preferably, the main polymerisation stages of the multistage process are such as described in EP 517 868, i.e. the production of fractions (A) and (B) is carried out as a combination of slurry polymerisation for fraction (A)/gas-phase polymerisation for fraction (B). The slurry polymerisation is preferably performed in a so-called loop reactor. Further preferred, the slurry polymerisation stage precedes the gas phase stage.

In such a process, preferably the high activity level is controlled and/or maintained with ethylene content in the loop reactor and/or with the solid concentration in a conventional manner.

As a further advantage of the invention, the yields of the product, i.e. the productivity, can be increased with the present polymer product/process.

Such a preparation process is very feasible for this invention, since the claimed high activities of the catalyst at the start of the polymerisation is very desirable in the first loop reactor thus enabling the good split balance to be achieved. As a result less "very high molecular weight" gels are formed and more uniform individual particles are obtained.

Optionally and advantageously, the main polymerisation stages may be preceded by a prepolymerisation, in which case up to 20 % by weight, preferably 1 to 10 % by weight, more preferably 1 to 5 % by weight, of the total base resin is produced. The prepolymer is preferably an ethylene homopolymer (HDPE). At the prepolymerisation, preferably all of the catalyst is charged into a loop reactor and the prepolymerisation is performed as a slurry polymerisation. Such a prepolymerisation leads to less fine particles being produced in the following reactors and to a more homogeneous product being obtained in the end.

The resulting end product consists of an intimate mixture of the polymers from the two reactors, the different molecular-weight-distribution curves of these polymers together forming a molecular-weight-distribution curve having a broad maximum or two maxima, i.e. the end product is a bimodal polymer mixture.

The beneficial properties of the polymer composition and process of the invention can in principle be obtained with any polymerisation catalyst which can be controlled to obtain the claimed high activity together the desired combination of (A) LMW and (B) HMW fractions and the claimed MFR's so that the above mentioned excellent homogeneity, the reduction and/or prevention of the undesirable gels forming component is achieved.

Preferable catalysts are those which are less $H_2$-sensitive and are controllable by the ethylene concentration for obtaining the desired high activity levels of the catalyst.

It is to be understood herein that also other process conditions and catalyst treatments can be used for the optimisation of the activity, but the main contribution to the catalyst activity is controllable by the less sensitivity to $H_2$ and by the ethylene concentration. Furthermore, the solids content can also be used for the control of the activity (i.e. overall productivity). These principles are within the skills of an artisan.

Thus, the catalysts include coordination catalysts of a transition metal compound of group 4 to 10 of the Periodic Table (IUPAC) or a compound of an actinide or lanthanide, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is non-silica supported ZN catalyst, and most preferably $MgCl_2$-based ZN catalyst.

The Ziegler-Natta catalyst further preferably comprises a group 4 (group numbering according to new IUPAC system) metal compound, preferably titanium, more preferably chlorine-containing titanium compound, magnesium dichloride and aluminium.

The catalyst may be commercially available or be produced in accordance or analogously to the literature. For the preparation of the preferable catalyst usable in the invention reference is made to WO2004055068 and WO2004055069 of Borealis and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

It is preferred that the multimodal base resin of the polyethylene composition according to the invention is a bimodal polyethylene mixture consisting of fractions (A) and (B), optionally further comprising a small prepolymerisation fraction in the amount as described above. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular polymer having no content of comonomer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 75 to 115 °C, more preferably is 80 to 105°C, and most preferably is 82 to 100°C, or from 85, even from 90 to 100°C, depending on the desired end application. And the temperature in the gas-phase reactor preferably is 70 to 105 °C, more preferably is 75 to 100°C, and most preferably is 82 to 97°C.

A chain-transfer agent, preferably hydrogen, is added as required to the reactors, and at least 100 to preferably at least 200, and up to 1500, preferably up to 800 moles of $H_2$/kmoles of ethylene are added to the loop reactor, when the LMW fraction is produced in this reactor, and 0 to 60 or 0 to 50, and, again depending on the desired end application, in certain embodiments even up to 100, or up to 500 moles of $H_2$/kmoles of ethylene are added to the gas phase reactor when this reactor is producing the HMW fraction.

Preferably, the base resin of the polyethylene composition is produced with a rate of at least 5 tons/h, more preferably at least 10 ton/h, and most preferably at least 15 tons/h.

The composition of the invention preferably is produced in a process comprising compounding step, wherein the base resin , i.e. the blend, which is typically obtained as a powder from the reactor, is extruded in an extruder and then pelletised to polymer pellets in a manner known in the art.

Optionally, additives or other polymer components can be added to the composition during the compounding step in the amount as described above. Preferably, the composition of the invention obtained from the reactor is compounded in the extruder together with additives in a manner known in the art.

The extruder may be e.g. any conventionally used extruder. As an example of an extruder for the present compounding step may be those as supplied by Japan steel works, Kobe steel or Farrel-Pomini, e.g. JSW 460P.

In one embodiment, the extrusion step is carried out using production rates of at least 400, at least 500, at least 1000 kg/h may be used in said compounding step.

In another embodiment the compounding step can be effected with production rate of that least 5 tons/h, preferably at least 15 tons/h, more preferably at least 20 or 25 tons/h or even at least 30 or more tons/h, such as at least 50, such as 1 to 50, preferably 5 to 40, more preferably 10 to 50, tons/h. In certain embodiments 10-25 tons/h may also be desired.

Alternatively, production rates at least 20 tons/h, preferably at least 25 tons/h, even at least 30 tons/h, e.g. 25-40 tons/h may be desired during the compounding step.

The present multimodal polyethylene composition of the invention enables such production rates within the property window of the invention, i.e. with various property combinations of MFR's of the fractions and of final base resin variations together with excellent homogeneity, just to mention few.

Preferably, in said extrusion step, a total SEI (specific energy input) of the extruder may be at least 150 kWh/ton, such as 150-400 kWh/ton, preferably 200 to 350, e.g. 200 to 300 kWh/ton.

It is known that the temperature of the polymer melt may vary in the extruder, the highest (max) melt temperature of the composition in the extruder during the extrusion step is typically more than 150°C, suitably between 200 to 350°C, preferably 250 to 310°C, more pref. 250 to 300°C.

The benefit of the invention is that an excellent homogeneity can be obtained without extensive mixing, already by effecting once the compounding step, e.g. the preferable extrusion with production rates as defined above, and additionally, together with the high level homogeneity desirable polymer properties can be achieved/maintained.

Furthermore, preferably, also the pellets obtained from the further compounding step of the invention may have the above defined homogeneity levels.

The determination of the homogeneity is preferably effected from a coloured sample of these pellets by using the white spot area and/or white spot rating method of ISO 18553 as disclosed in this application, whereby the coloured sample is obtained by effecting the above described compounding step of the polyethylene composition powder in the presence of a pigment, e.g. carbon black. If desired, other additives can also be used in said samples according to conventional practice in the white spot determinations.

Accordingly, the polymer composition of the invention can be used in many end applications i.a. producing moulded articles, including injection moulded articles (e.g. packaging articles, such as transportation packaging, houseware applications and caps/closures) and blow moulded articles, as well as pipes. The invention provides said use and the obtained articles comprising the polymer composition of the invention.

**Examples**

**1. Definitions and measurement methods**

a) Molecular weight

The weight average molecular weight $M_w$ and the molecular weight distribution (MWD = $M_w/M_n$ wherein $M_n$ is the number average molecular weight and $M_w$ is the weight average molecular weight) is measured by a method based on ISO 16014-4:2003. A Waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howings constant K: $9.54* 10^{-5}$ and a: 0.725 for PS, and K: $3.92* 10^{-4}$ and a: 0.725 for PE). The ratio of $M_w$ and $M_n$ is a measure of the broadness of the distribution, since each is influenced by the opposite end of the "population".

b) Density

Density is measured according to ISO 1872, Annex A.

c) Melt Flow Rate/Flow Rate Ratio

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C and may be determined at different loadings such as 2.16 kg ($MFR_2$), 5 kg ($MFR_5$) or 21.6 kg ($MFR_{21}$).

The quantity FRR (flow rate ratio) is an indication of molecular weight distribution and denotes the ratio of flow rates at different loadings. Thus, $FRR_{21/5}$ denotes the value of $MFR_{21}/MFR_5$.

d) Rheological parameters

Rheological parameters such as Shear Thinning Index SHI and Viscosity are determined by using a rheometer, preferably a Rheometrics Phisica MCR 300 Rheometer. The definition and measurement conditions are described in detail on page 8 line 29 to page 11, line 25 of WO 00/22040.

SHI value is obtained by calculating the complex viscosities $eta_{(1)}$ and $eta_{(100)}$ at a constant shear stress of 1 kPa and 100 kPa, respectively. The shear thinning index $SHI_{(1/100)}$ is defined as the ratio of the two viscosities $eta_{(1)}$ and $eta_{(100)}$. Correspondingly, the SHI(2.7/210) is defined as the ratio of the two viscosities $eta_{(2.7)}$ and $eta_{(210)}$.

e) Measurement of Homogeneity

The polymer composition according to the present invention has an improved homogeneity directly after its production in the polymerisation reactor. However, as, first, homogeneity is usually measured only on a compounded composition, and, second, the way in which compounding is carried out has a decisive influence on the homogeneity of the compounded composition, it is important that the compounding conditions to which the composition is subjected and the compounding equipment used are/is clearly defined before homogeneity of the composition is determined, e.g. in terms of the white spot area test or the modified ISO 18553 white spot rating test as described below.

Accordingly, homogeneity of the compositions described herein is determined after a single compounding step only, which is to be carried out as follows:

The base resin powder coming from the reactor is transferred, e.g. via intermediate holding tanks (50-250 tons), to the compounding unit without extra handling like grinding or cooling or similar processes.

The powder is then poured into the inlet of the compounder together with the appropriate amounts of additives. The additives can be, typically, stearates, antioxidants, UV-stabilisers, or pigments/carbon blacks. The additives can be added as a pure component or as a master batch with a PE carrier.

The base resin plus additives are then passed through the compounding unit only once.

No material that has passed the compounder once is allowed to be transferred back to the inlet of the compounder for further work nor is it allowed to pass the compounded material further to a second processing unit.

The idea of the single compounding step is that a reactor powder is allowed *only one single pass* through the compounding unit.

The equipment to be used for the single compounding step is a twin-screw extruder like counter rotating equipment as supplied by Japan steel works, e.g. CIM JSW 460P or equivalent equipment.

Typical compounding conditions in the single compounding step used in CIM JSW 460P having a screw diameter of 460 mm are:

| | |
|---|---|
| production: | 25 to 30 tons/h |
| mixer specific energy input (SEI): | 260 kWh/ton |
| gear pump SEI: | 19 kWh/ton |
| Temp. before gear pump: | 290 °C |
| Temp. after gear pump: | 300 °C |
| suction pressure gear pump: | 1.6 bar |
| mixer speed: | 400 rpm |

The white spot area of the once compounded composition is determined at least partly following ISO 18553, as follows:

A sample of a composition (including a pigment to make the inhomogeneities visible, e.g. carbon black in an amount of around 2.5 wt%), which is obtained after a single compounding step as described above, is analysed by first obtaining 6 microtome cuts of 6 different parts of the sample (thickness < 60 micrometer, diameter 3 to 5 mm).

The cuts are evaluated at a magnification of 100, and the size, i.e. the part of the surface, of the non-coloured inclusions ("white spots", agglomerates, particles) on a total surface of each cut of 0.7 mm$^2$ is determined. All white spots with a diameter > 5 microns are counted. The "white spot area" is then expressed as the averaged fraction of the white spots on the total surface of the sample cut.

f) Measurement of homogeneity - Rating in modified ISO 18553 white spot rating test

In addition to the white spot area test, homogeneity complementary is determined according to the modified ISO 18553 white spot rating test. In this test, inhomogeneities of the composition present after a single compounding step as described above, which appear as white spots, are determined and rated according to the rating scheme given in ISO 18553. The lower the composition is rated in this test, the better is the homogeneity of the composition.

g) Charpy impact strength

Charpy impact strength was determined according to ISO 179:2000 on V-notched samples at 0 °C (Charpy impact strength (0°C)) and -20 °C (Charpy impact strength (-20°C))

**2. Polymer compositions produced**

The following polymerisation procedure and catalyst were used in all the examples of the invention unless otherwise stated.

As a catalyst a Lynx 200 ™ catalyst as manufactured and supplied by Engelhard Corporation, Pasadena, USA.

All the examples were produced in pilot plant multistage reaction comprising a first stage in slurry in a 50 dm$^3$ loop reactor, followed by transferring the slurry to a 500 dm$^3$ loop reactor wherein polymerisation was continued in slurry to produce the LMW fraction (A) and a second polymerisation in a gas phase reactor in the presence of the product from the second loop reactor to produce the comonomer containing HMW fraction (B).

The polymerisation conditions applied and the properties of the polymers are listed in the following tables

After production of fractions (A) and (B), the obtained base resin powder was transferred to an extruder where it was compounded together with 2.5 wt-% carbon black as described above. The white spot area/rating was determined from these examples.

**Examples in Table 1:** In these examples, polymer composition according to the invention have been made (examples 1-3), which may be used e.g. for pipe applications.

Comparative example 1 was produced in the same loop-gas phase system and with the comparable MFR$_5$ and MFR$_{21}$ values of the final base resin as the resin of the example 3, but using a silica supported ZN catalyst as prepared according to the ex.2 of EP949275 having an overall catalyst activity typically clearly below 30 kg polymer per g catalyst.

The polymerisation conditions and the properties of the fractions, the base resin and the composition are listed in Table 1.

**Examples in Table 2:** In these examples, further polymer composition according to the invention have been made (Examples 4 to 6), which may be used e.g. for pipe applications. The polymerisation conditions and the properties of the fractions, the base resin and the composition are listed in Table 2.

Table 1:

|  | Example 1 | Example 2 | Example 3 | Comp. Example 1 |
|---|---|---|---|---|
| **Prepolymeriser Conditions/Product Properties** |  |  | not in use |  |
| Temp. °C | 40 | 40 |  | 70 |
| MFR$_2$ [g/10min] |  | 10 |  |  |
| MFR$_5$ [g/10min] | 1.46 |  |  |  |
| MFR$_{21}$ [g/10min] |  |  |  |  |

Table continued

|  | Example 1 | Example 2 | Example 3 | Comp. Example 1 |
|---|---|---|---|---|
| **Prepolymeriser Conditions/Product Properties** |  |  | not in use |  |
| Amount [wt%] | 2 | 2 |  |  |
|  |  |  |  |  |
| **Loop Reactor Conditions/Product Properties** |  |  |  |  |
| Temp. [°C] | 95 | 95 | 95 | 95 |
| Pressure [bar] | 56 | 56 | 59.9 | 57.9 |
| $C_2$ concentr. [mol%] | 1.8 | 1.8 | 5.5 | 6.0 |
| $H_2/C_2$ [mol/kmol] | 840 | 760 | 787 | 617 |
| Productivity kg polymer/g catalyst |  |  | 28.3 | 2.0 |
| Amount [wt%] | 48 | 48 | 50 |  |
| $MFR_2$ [g/10min] | 304 | 342 | 450 | 1146 |
| Density [kg/m$^3$] | >970 | >970 | >970 | >970 |
|  |  |  |  |  |
| **Gas Phase Reactor Conditions/ Product Properties** |  |  |  |  |
| Temp. [°C] | 85 | 85 | 85 | 85 |
| Pressure [bar] | 20 | 20 |  |  |
| $C_2$ concentr. [mol%] | 4 | 4 | 10.6 | 4.1 |
| H2/C2 [mol/kmol] | 33 | 34 | 30.7 | 14.3 |
| comonomer/C2 ratio [mol/kmol] | 108 (butene-1) | 99 (butene-1) | 21.1 (hexene-1) | 18.9 (hexene-1) |
| $MFR_5$ [g/10min] | 0.23 | 0.26 | 0.24 | 0.26 |
| $MFR_{21}$ [g/10min] | 7.6 | 6.9 | 8.6 | 11.4 |
| $FRR_{2/15}$ | 33 | 31 | 35.8 | 43.8 |
| Density [kg/m$^3$] | 948 | 948 | 953 | 955 |
| Amount [wt%] | 50 | 50 | 50 | 50 |
|  |  |  |  |  |
| **Catalyst Overall Activity [kg polymer/g catalyst]** | 50 | 50 | 57 | 4 |
|  |  |  |  |  |
| **Compounded Composition** |  |  |  |  |
| $MFR_5$ [g/10min] | 0.26 | 0.23 | 0.20 | 0.20 |
| $MFR_{21}$ [g/10min] | 9.2 | 7.6 | 8.1 | 9.1 |
| $FRR_2II_s$ | 35.1 | 33.5 | 40.5 | 45.5 |
| Density [kg/m$^3$] | 958 | 959 | 966.4 | 961.4 |

Table continued

| Compounded Composition | | | | |
|---|---|---|---|---|
| White spot ISO 18553 rating test | 2.7 | 4.2 | 2.9 | 5.5 |
| White Spot Area [%] | 0.5 | 0.1 | 0.08 | |
| $SHI_{(2.7/210)}$ | 52.5 | 47.4 | 110.0 | 100.0 |
| $Eta_{2.7}$ [kPas] | 251 | 260 | 461 | 302 |
| $Eta_{747}$ [kPas] | 487 | 451 | | |
| $M_w$ [kD] | | 263 | | |
| $M_n$ [kD] | | 6.03 | | |
| D | | 43,6 | | |

Table 2:

| | Example 4 | Example 5 | Example 6 |
|---|---|---|---|
| **Prepolymeriser Conditions/Product Properties** | | | |
| Temp. [°C] | 40 | 40 | 40 |
| Pressure [bar] | 60 | 60 | 60 |
| cocatalyst feed [g/h] | 4.0 | 4.0 | 4.0 |
| C2 feed [kg/h] | 0.61 | 0.60 | 0.60 |
| H2 feed [g/h] | 3.0 | 3.0 | 3.0 |
| C3 feed [kg/h] | 52 | 50 | 52 |
| | | | |
| **Loop Reactor Conditions/Product Properties** | | | |
| Temp. [°C] | 95 | 95 | 95 |
| Pressure [bar] | 56 | 56 | 56 |
| $C_2$ concentr. [mol%] | 1.7 | 1.8 | 1.9 |
| $H_2/C_2$ [mol/kmol] | 526 | 503 | 486 |
| production rate [kg/h] | 45 | 45 | 45 |
| Productivity kg polymer/g catalyst | 19 | 19 | 19 |
| Amount [wt%] | 51 | 51 | 49 |
| $MFR_2$ [g/10min] | 450 | 450 | 400 |
| Density [kg/m$^3$] | | | |
| bulk density [kg/m$^3$] | 404 | 404 | 402 |
| ash content [ppm] | 120 | 120 | 80 |
| | | | |
| **Gas Phase Reactor Conditions/Product Properties** | | | |
| Temp. [°C] | 85 | 85 | 85 |
| Pressure [bar] | 20 | 20 | 20 |

Table continued

| Gas Phase Reactor Conditions/Product Properties | | | |
|---|---|---|---|
| C2 feed [kg/h] | 47 | 45 | 47 |
| H2 feed [g/h] | 0.04 | 0.04 | 0.04 |
| hexene-1 feed [kg/h] | 2.6 | 2.6 | 2.2 |
| $C_2$ concentr. [mol%] | 4.1 | 4.1 | 4.2 |
| H2/C2 [mol/kmol] | 0.7 | 0.7 | 0.6 |
| hexene-1/C2 ratio [mol/kmol] | 30 | 32 | 26 |
| production rate [kg/h] . | 43 | 43 | 46 |
| $MFR_5$ [g/10min] | 0.27 | 0.27 | 0.20 |
| $MFR_{21}$ [g/10min] | 9.6 | 9.6 | 7.4 |
| $FRR_{21/5}$ | 36 | 36 | 37 |
| Density [kg/m$^3$] | 946 | 947 | 945 |
| Amount [wt%] | 49 | 48 | 50 |
| | | | |
| Catalyst Overall Activity [kg polymer/g catalyst] | 37 | 37 | 38 |
| | | | |
| Compounded Composition | | | |
| $MFR_5$ [g/10min] | 0.24 | 0.25 | 0.22 |
| $MFR_{21}$ (g/10min] | 9.2 | 10.0 | 8.8 |
| $FRR_{21/5}$ | 38 | 40 | 40 |
| Density [kg/m$^3$] | 957 | 954 | 957 |
| White spot ISO 18553 rating test | 2.0 | 2.6 | 2.1 |
| $M_w$ [kD] | | 370 | 360 |
| $M_n$ [kD] | | 6.7 | 9.5 |
| MWD | | 56 | 38 |
| $SHI_{(2.7/210)}$ | | 220 | 230 |
| $Eta_{2.7}$ [kPas] | | 453 | 590 |
| G' [5 kPa] | | 3004 | 3225 |
| melting temperature [°C] | | 129.2 | 128.2 |
| crystallinity % | | 66.8 | 67.5 |
| crystallisation temperature [°C] | | 117.2 | 117.6 |
| Charpy impact strength at 0°C ISO 179 [kJ/m$^2$] | | 17.0 | 17.9 |
| Charpy impact strength at -20°C ISO 179 [kJ/m$^2$] | | | |
| ESCR, CTL at 5.0 MPa [h] | | > 7049 | > 7049 |

**Claims**

1.  A polyethylene composition comprising a base resin which comprises

    (A) a first ethylene homo- or copolymer fraction, and

(B) a second ethylene homo- or copolymer fraction,

wherein

(i) fraction (A) has a lower weight average molecular weight than fraction (B),
(ii) the base resin has an $MFR_5$ of at least 0.01 g/10 min and
(iii) the base resin is obtainable by polymerising ethylene and optionally at least one comonomer in the presence of a catalyst having an overall activity of at least 30 kg polymer per g catalyst.

2. Polyethylene composition according to claim 1 wherein the base resin is obtainable by polymerising ethylene and optionally at least one comonomer in the presence of a catalyst having an overall activity of at least 40 kg polymer per g catalyst.

3. Polyethylene composition according to claim 2 wherein the base resin is obtainable by polymerising ethylene and optionally at least one comonomer in the presence of a catalyst having an overall activity of at least 50 kg polymer per g catalyst.

4. Polyethylene composition according to claim 3 wherein the base resin is obtainable by polymerising ethylene and optionally at least one comonomer in the presence of a catalyst having an overall activity of at least 70 kg polymer per g catalyst.

5. Polyethylene composition according to claim 4 wherein the base resin is obtainable by polymerising ethylene and optionally at least one comonomer in the presence of a catalyst having an overall activity of at least 100 kg polymer per g catalyst.

6. Polyethylene composition according to any of the preceding claims wherein the composition is obtainable by extruding the composition with a production rate of at least 5 tons/h.

7. Polyethylene composition according to any of the preceding claims wherein the composition is obtainable by extruding the composition with a specific energy input in the extruder of at least 150 kWh/ton.

8. Polyethylene composition according to any of the preceding claims wherein the composition is obtainable by extruding the composition with a highest (max) melt temperature of equal to or less than 310 °C in the extrusion step.

9. Polyethylene composition according to any of the preceding claims wherein the weight split of fraction (A) to fraction (B) in the base resin is from 80:20 to 20:80.

10. Polyethylene composition according to any of the preceding claims wherein fraction (A) has an $MFR_2$ of at least 10 g/10 min.

11. Polyethylene composition according to any of the preceding claims wherein fraction (A) has an $MFR_2$ of at least 100 g/10 min.

12. Polyethylene composition according to any of the preceding claims wherein fraction (A) has an $MFR_2$ of at least 200 g/10 min.

13. Polyethylene composition according to any of the preceding claims wherein the base resin has a density of at least 920 kg/m$^3$.

14. Polyethylene composition according to any of the preceding claims wherein the composition is for injection moulding including transportation packaging and houseware articles and the base resin has a density of at least 923 kg/m$^3$ to 980 kg/m$^3$.

15. Polyethylene composition according to claim 14 wherein the base resin has a density of at least 950 kg/m$^3$.

16. Polyethylene composition according to claim 15 wherein the base resin has a density of at least 958 kg/m$^3$ to 970 kg/m$^3$

17. Polyethylene composition according to any of the claims 1 to 17 wherein the composition is for pipe applications and the base resin has a density of at least 930 kg/m$^3$.

18. Polyethylene composition according claim 17 wherein the base resin has a density of at least 940 kg/m$^3$ to 970 kg/m$^3$

19. Polyethylene composition according to claim 18 wherein the base resin has a density of at least 949 kg/m$^3$.

20. Polyethylene composition according to claim 19 wherein the base resin has a density of at least 953 kg/m$^3$.

21. Polyethylene composition according to claim 17 wherein the base resin has a density of at least 950 kg/m$^3$ to 968 kg/m$^3$.

22. Polyethylene composition according to claim 17 wherein the base resin has a density of at least 958 kg/m$^3$ to 960 kg/m$^3$.

23. Polyethylene composition according to any of the preceding claims wherein the composition is for end applications pipe and certain moulding applications and has an MFR$_5$ of 2 g/10min or less.

24. Polyethylene composition according to claim 23 wherein the composition has an MFR$_5$ of 1 g/10min or less.

25. Polyethylene composition according to claim 24 wherein the composition has an MFR$_5$ of 0.6 g/10min or less.

26. Polyethylene composition according to claim 25 wherein the composition has an MFR$_5$ of 0.35 g/10min or less.

27. Polyethylene composition according to any of the preceding claims wherein the composition is for moulding applications and has an MFR$_2$ of 20 g/10min or less.

28. Polyethylene composition according to any of the preceding claims wherein the composition is for end applications including pipe and has an SHI$_{(2.7/210)}$ of 5 to 300.

29. Polyethylene composition according to any of the preceding claims wherein the composition is for pipe and has a dynamic viscosity at a shear stress of 2.7 kPa eta$_{2.7}$ of 10 to 500 kPas

30. Polyethylene composition according to any of the preceding claims wherein the composition has a white spot area of 1 % or below.

31. Polyethylene composition according to any of the preceding claims wherein the composition has a rating in the ISO 18553 white spot rating test of below 4.5.

32. A process for the production of a multimodal polyethylene composition comprising the steps of

   i) polymerising ethylene monomers, and optionally one or more alpha-olefin comonomers, in the presence of a coordination catalyst to obtain a first ethylene homo- or copolymer fraction (A)
   ii) polymerising ethylene monomers, and optionally one or more alpha-olefin comonomers, in the presence of a coordination catalyst to obtain a second ethylene homo- or copolymer fraction (B) having a higher average molecular weight than fraction (A)

   wherein the second polymerisation step is carried out in the presence of the polymerization product of the first step, and the overall activity of the catalyst at least 30 kg polymer per g catalyst.

33. Process according to claim 32 wherein the catalyst is a non silica-supported, magnesium dichloride based Ziegler-Natta catalyst and has an overall activity of at least 40 kg polymer per g catalyst.

34. Process according to claims 32 or 33 wherein the catalyst has an overall activity of at least 50 kg polymer per g catalyst.

35. Process according to claims 32 or 33 wherein the catalyst has an overall activity of at least 70 kg polymer per g catalyst.

36. Process according to claims 32 or 33 wherein the catalyst has an overall activity of at least 100 kg polymer per g catalyst.

37. Process according to claims 32 or 33 wherein the catalyst has an overall activity of at most 140 kg polymer per g catalyst.

38. Process according to any of claims 32 to 37 wherein the composition is obtained by extruding the composition with a production rate of at least 5 tons/h.

39. Process according to any of claims 32 to 38 wherein the composition is obtained extruding the composition with a specific energy input in the extruder of at least 150 kWh/ton.

40. Process according to any of claims 32 to 39 wherein the composition is obtained by extruding the composition with a highest (max) melt temperature of equal to or less than 310 °C in the extrusion step.

41. Process according to any of claims 32 to 40 wherein the weight split of fraction (A) to fraction (B) in the base resin is from 80:20 to 20:80.

42. Process according to any of claims 32 to 41 wherein the polymerization to obtain fraction (A) is carried out in a slurry.

43. Process according to any of claims 32 to 42 wherein the polymerization to obtain fraction (B) is carried out in the gas phase.

44. Process according to any of claims 32 to 43 wherein the first polymerisation step is preceded by a prepolymerisation step.

45. A polyethylene composition comprising a polyethylene resin obtainable by a process according to any of claims 32 to 44.

46. An article comprising the polyethylene composition according to any of claims 1 to 31 and 45.

47. An article according to claim 46 wherein the article is a moulded article or a pipe.

48. Use of a polyethylene composition according to any of claims 1 to 31 and 45 for the production of an article.

49. Use according to claim 48 wherein the article is a moulded article or a pipe

**European Patent Office**

## EUROPEAN SEARCH REPORT

Application Number

EP 04 02 6097

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 460 105 A (BOREALIS TECHNOLOGY OY) 22 September 2004 (2004-09-22) * the whole document * ----- | 1-49 | C08L23/06 C08L23/04 C08F10/02 |
| X | US 2002/045711 A1 (BACKMAN MATS ET AL) 18 April 2002 (2002-04-18) * the whole document * ----- | 1-49 | |
| X | US 6 455 642 B1 (MYHRE OLE JAN ET AL) 24 September 2002 (2002-09-24) * the whole document * ----- | 1-49 | |
| X | US 2003/208010 A1 (LINDROOS JARMO ET AL) 6 November 2003 (2003-11-06) * the whole document * ----- | 1-49 | |
| X | EP 0 949 274 A (BOREALIS POLYMERS OY) 13 October 1999 (1999-10-13) * the whole document * ----- | 1-49 | |
| | | | TECHNICAL FIELDS SEARCHED (Int.Cl.7) C08L C08F |

The present search report has been drawn up for all claims

| Place of search | Date of completion of the search | Examiner |
|---|---|---|
| Munich | 16 March 2005 | Lippert, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 02 6097

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2005

| Patent document cited in search report | | Publication date | Patent family member(s) | | Publication date |
|---|---|---|---|---|---|
| EP 1460105 | A | 22-09-2004 | EP | 1460105 A1 | 22-09-2004 |
| US 2002045711 | A1 | 18-04-2002 | AT | 273345 T | 15-08-2004 |
| | | | AU | 748515 B2 | 06-06-2002 |
| | | | AU | 1421200 A | 01-05-2000 |
| | | | BR | 9914534 A | 03-07-2001 |
| | | | CN | 1326484 A | 12-12-2001 |
| | | | DE | 69919393 D1 | 16-09-2004 |
| | | | DE | 69919393 T2 | 23-12-2004 |
| | | | EA | 3428 B1 | 24-04-2003 |
| | | | EP | 1137707 A1 | 04-10-2001 |
| | | | PL | 347899 A1 | 22-04-2002 |
| | | | WO | 0022040 A1 | 20-04-2000 |
| US 6455642 | B1 | 24-09-2002 | FI | 981034 A | 09-11-1999 |
| | | | AT | 282052 T | 15-11-2004 |
| | | | AT | 255606 T | 15-12-2003 |
| | | | AU | 747954 B2 | 30-05-2002 |
| | | | AU | 3151199 A | 25-10-1999 |
| | | | AU | 4042799 A | 29-11-1999 |
| | | | AU | 741875 B2 | 13-12-2001 |
| | | | AU | 4042899 A | 29-11-1999 |
| | | | BR | 9910294 A | 16-01-2001 |
| | | | CA | 2331628 A1 | 18-11-1999 |
| | | | CN | 1130387 C | 10-12-2003 |
| | | | CN | 1125091 C | 22-10-2003 |
| | | | DE | 69913346 D1 | 15-01-2004 |
| | | | DE | 69913346 T2 | 14-10-2004 |
| | | | DE | 69921812 D1 | 16-12-2004 |
| | | | EP | 1084162 A1 | 21-03-2001 |
| | | | EP | 1086155 A1 | 28-03-2001 |
| | | | EP | 1090048 A1 | 11-04-2001 |
| | | | ES | 2211091 T3 | 01-07-2004 |
| | | | WO | 9951649 A1 | 14-10-1999 |
| | | | WO | 9958583 A1 | 18-11-1999 |
| | | | WO | 9958584 A1 | 18-11-1999 |
| | | | JP | 2002514665 T | 21-05-2002 |
| | | | TW | 473502 B | 21-01-2002 |
| | | | US | 6562905 B1 | 13-05-2003 |
| | | | US | 6642323 B1 | 04-11-2003 |
| | | | ZA | 200006010 A | 24-04-2001 |
| US 2003208010 | A1 | 06-11-2003 | FI | 980788 A | 07-10-1999 |
| | | | US | 2005020785 A1 | 27-01-2005 |
| | | | AT | 282052 T | 15-11-2004 |
| | | | AU | 747954 B2 | 30-05-2002 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 04 02 6097

This annex lists the patent family members relating to the patent documents cited in  the above-mentioned European search report.
The members are as contained in the European Patent Office EDP file on
The European Patent Office is in no way liable for these particulars which are merely  given for the purpose of information.

16-03-2005

| Patent document cited in search report | Publication date | Patent family member(s) | | Publication date |
|---|---|---|---|---|
| US 2003208010 A1 | | AU | 3151199 A | 25-10-1999 |
| | | AU | 3334299 A | 25-10-1999 |
| | | BR | 9909435 A | 12-12-2000 |
| | | CA | 2325632 A1 | 14-10-1999 |
| | | CN | 1299375 A | 13-06-2001 |
| | | DE | 69921812 D1 | 16-12-2004 |
| | | EP | 0949274 A2 | 13-10-1999 |
| | | EP | 1084162 A1 | 21-03-2001 |
| | | WO | 9951646 A1 | 14-10-1999 |
| | | WO | 9951649 A1 | 14-10-1999 |
| | | JP | 2002510719 T | 09-04-2002 |
| | | TW | 473502 B | 21-01-2002 |
| | | US | 6620758 B1 | 16-09-2003 |
| | | US | 6562905 B1 | 13-05-2003 |
| | | ZA | 200005015 A | 22-03-2001 |
| EP 0949274 A | 13-10-1999 | FI | 980788 A | 07-10-1999 |
| | | AT | 282052 T | 15-11-2004 |
| | | AU | 747954 B2 | 30-05-2002 |
| | | AU | 3151199 A | 25-10-1999 |
| | | AU | 3334299 A | 25-10-1999 |
| | | BR | 9909435 A | 12-12-2000 |
| | | CA | 2325632 A1 | 14-10-1999 |
| | | CN | 1299375 A | 13-06-2001 |
| | | DE | 69921812 D1 | 16-12-2004 |
| | | EP | 0949274 A2 | 13-10-1999 |
| | | EP | 1084162 A1 | 21-03-2001 |
| | | WO | 9951646 A1 | 14-10-1999 |
| | | WO | 9951649 A1 | 14-10-1999 |
| | | JP | 2002510719 T | 09-04-2002 |
| | | TW | 473502 B | 21-01-2002 |
| | | US | 6620758 B1 | 16-09-2003 |
| | | US | 2003208010 A1 | 06-11-2003 |
| | | US | 6562905 B1 | 13-05-2003 |
| | | US | 2005020785 A1 | 27-01-2005 |
| | | ZA | 200005015 A | 22-03-2001 |

EPO FORM P0459

For more details about this annex : see Official Journal of the European Patent Office, No. 12/82